# EUROPÄISCHE PATENTSCHRIFT

(11) **EP 1 085 197 B1**
(45) Veröffentlichungstag und Bekanntmachung des Hinweises auf die Patenterteilung: **09.10.2002**
(21) Anmeldenummer: 00118592.5
(22) Anmeldetag: 28.08.2000
(51) Int. Cl.: F02M 35/108, F02D 9/10

(54) **Luftansaugkanalsystem für Brennkraftmaschinen**
Intake duct system for a combustion engine
Système de conduits d'admission pour moteur à combustion

(30) Priorität: 17.09.1999 DE 19944623
(43) Veröffentlichungstag der Anmeldung: 21.03.2001
(73) Patentinhaber: Pierburg GmbH, 41460 Neuss (DE)
(72) Erfinder: Simons, Norbert, 52072 Aachen (DE)
(74) Vertreter: Ter Smitten, Hans

(56) Entgegenhaltungen:
- AT-U- 2 743
- DE-A- 19 504 382
- DE-A- 19 707 599
- DE-A- 19 728 078
- US-A- 4 317 438

## Beschreibung

Die Erfindung betrifft ein Luftansaugkanalsystem nach dem Oberbegriff des Anspruchs 1.

Derartige Luftansaugkanalsysteme sind für Otto- und Dieselbrennkraftmaschinen im Einsatz, die mit einer Direkteinspritzung arbeiten. Die Direkteinspritzung besitzt das Potential einer deutlichen Verbrauchseinsparung und stellt damit einen wichtigen Baustein für die notwendige Absenkung der verkehrsbedingten CO₂-Emissionen dar. Aus dem transienten Wechsel zwischen Ladungsschichtung bei Teillast und Betrieb mit homogenem Gemisch bei Vollast ergeben sich spezielle Forderungen an das Motormanagement, z. B. werden Drallklappen des Luftansaugkanalsystem last- und/oder drehzahlabhängig gesteuert. *So ist aus der AT 002 743 U 1 ein Luftansaugkanalsystem mit* einer *Einlaßleitungsanordnung bekannt, das Einzelansaugkanäle definiert, die zu jedem einzelnen Zylinder führen, und die durch eine Drallklappe abgeschlossen werden können. Das Einlaßleitungssystem ist dabei als Gehäuseeinsatz ausgeführt, der zwischen Saugrohr und Zylinderkopf angeordnet wird.* Hierbei werden hohe Anforderungen bezüglich Steuerbarkeit und Lebensdauer gestellt, die mit herkömmlichen Luftansaugkanalsystemen nicht erreichbar sind.

Hiervon ausgehend liegt der Erfindung die Aufgabe zugrunde, Maßnahmen aufzufinden, mit denen eine leichte Steuerbarkeit der Drallklappen sowie eine verlängerte Lebensdauer erreichbar sind.

Diese Aufgabe ist durch die im Kennzeichen des Anspruches 1 angegebenen Merkmale gelöst, wobei in den Unteransprüchen Merkmale vorteilhafter Weiterbildungen angegeben sind.

Ein Ausführungsbeispiel der Erfindung ist in der Zeichnung dargestellt und wird nachfolgend beschrieben.

Die Zeichnung zeigt:
**Fig. 1**
   eine schematische Darstellung eines Luftansaugkanalsystems einer Brennkraftmaschine mit abgeschnittenen Einzelansaugkanälen,
**Fig. 2**
   ein Einsatzstück als Einzelteil,
**Fig. 3**
   eine Einsatzhälfte eines Einsatzstückes mit eingelegter Drallklappe,
**Fig. 4**
   einen geschnittenen Einsatzschacht mit Einsatzstück,
**Fig. 5**
   eine weitere Ausführungsform des Einsatzstückes.

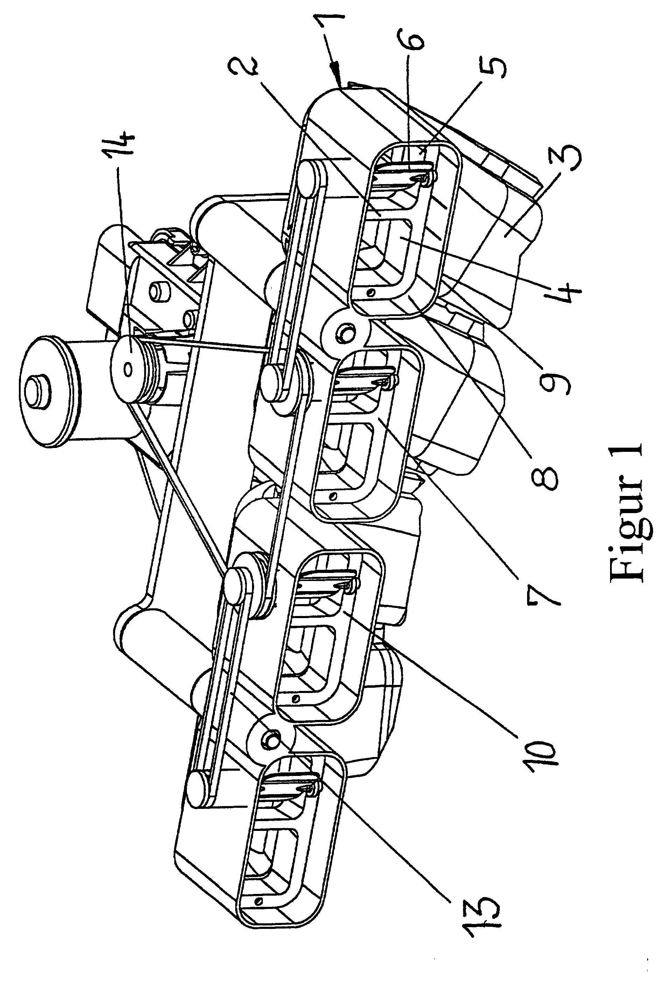

Fig. 1 zeigt schematisch ein Luftansaugkanalsystem 1 für Brennkraftmaschinen mit einem Aufteilungsabschnitt 2 eines zu jedem einzelnen Zylinder der Brennkraftmaschine führenden Einzelansaugkanals 3 in zwei Einzelkanäle 4, 5, von denen einer durch eine Drallklappe 6 abgeschlossen werden kann.

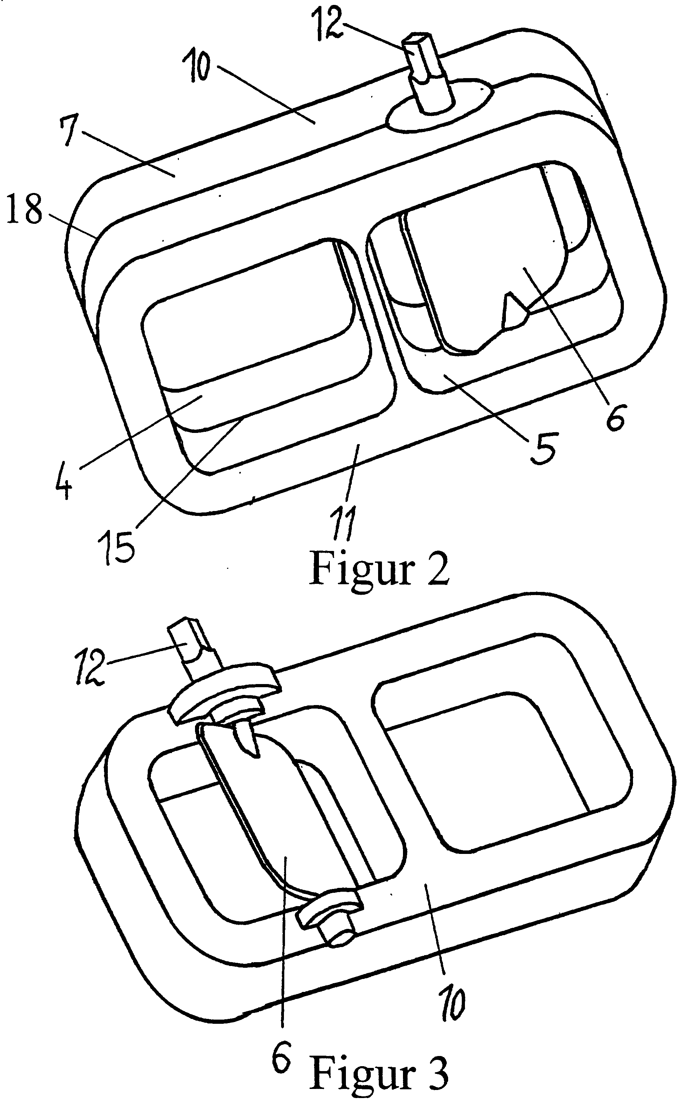

Bei diesem Luftansaugkanalsystem 1 ist nun vorgesehen, daß der Aufteilungsabschnitt 2 als Einsatzstück 7, in Fig. 2 dargestellt, ausgebildet und in einen Einsatzschacht 8 am Luftansaugkanalsystem 1 eingesetzt ist, das einen Anschlußflansch 9 zum Zylinderkopf der Brennkraftmaschine hin bildet.

Es ist aus Fig. 1 und 2 ersichtlich, daß das Einsatzstück 7 aus zwei zusammengesetzten Einsatzhälften 10, 11 gebildet ist. Dadurch, daß die Einsatzhälften 10, 11 über die Drallklappe 6 lagernde Lagerbohrungen zusammengefügt werden, läßt sich die Drallklappe 6 einlegen und dort halten.

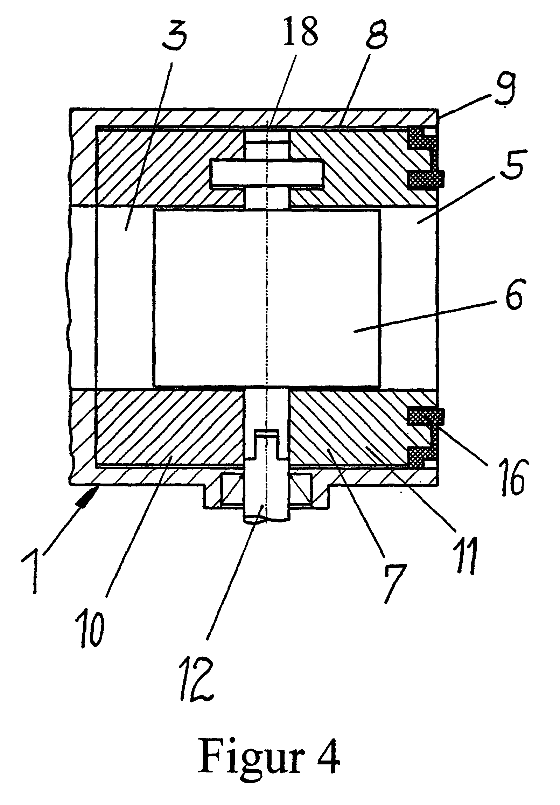

Es ist ersichtlich, daß das Einsatzstück 7 einen Wellenstumpf 12 aufweist, der mit der Drallklappe 6 verbunden ist und durch einen Schlitz der Wandung des Einsatzschachtes 8 nach außen ragt. Diese Maßnahme ermöglicht das Einlegen des Einsatzstückes 7 bei nach außen ragendem Wellenstumpf 12. Der Wellenstumpf 12 kann jedoch auch, wie in Fig. 4 dargestellt ist, von außen in die als Kupplung ausgeführte Drallklappe 6 eingesetzt werden. Vorteilhafterweise ist der Wellenstumpf 12 jedes Einsatzstückes 7 über eine Antriebsverbindung 13 mit einem Steller 14 verbunden, wobei vorgesehen sein kann, daß Elemente der Antriebsverbindung 13 und des Stellers 14 in einem auf die Wellenstümpfe 12 aufgesetzten Kassettenteil angeordnet sind, oder alternativ, daß jeweils paarweise angeordnete Wellenstümpfe 12 über eine Antriebsverbindung 13 und je ein Wellenstumpf 12 der paarweise angeordneten über eine weitere Antriebsverbindung 13 mit dem Steller 14 verbunden sind.

Wie in Fig. 2 dargestellt, kann das Einsatzstück 7 eine strömungsgünstige Kontur seiner Einzelkanäle 4, 5 aufweisen, z. B. einen Einlauftrichter 15.

Als besonderer Vorteil des erfindungsgemäßen Luftansaugkanalsystems hat sich gezeigt, daß durch Einsatz von weiteren Einsatzstückausführungen, z. B. auch ohne Drallklappe 6 oder ohne Aufteilungsabschnitt 2 für normale Saugrohreinspritzmotoren, eine größere Ausführungsanzahl mit dem selben Luftansaugkanalbasissystem abdecken läßt.

Als Antriebsverbindung kommen Hebelstangen, Zahnräder, Zahnriemen usw. in Frage. Der Flansch 9 weist ein als Axial- und Radialdichtung wirkendes Elastomerformstück 16 auf, das im vorliegenden Ausführungsbeispiel das Einsatzstück 7 gegenüber dem nicht dargestellten Zylinderkopf abdichtet. Auch kann das Einsatzstück 7 auf gleiche Weise gegenüber dem Einzelansaugkanal 3 abgedichtet sein.

Der Wellenstumpf 12 wird im vorliegenden Ausführungsbeispiel durch einen Wellendichtring 17 gegenüber dem Anschlußflansch 9 abgedichtet.

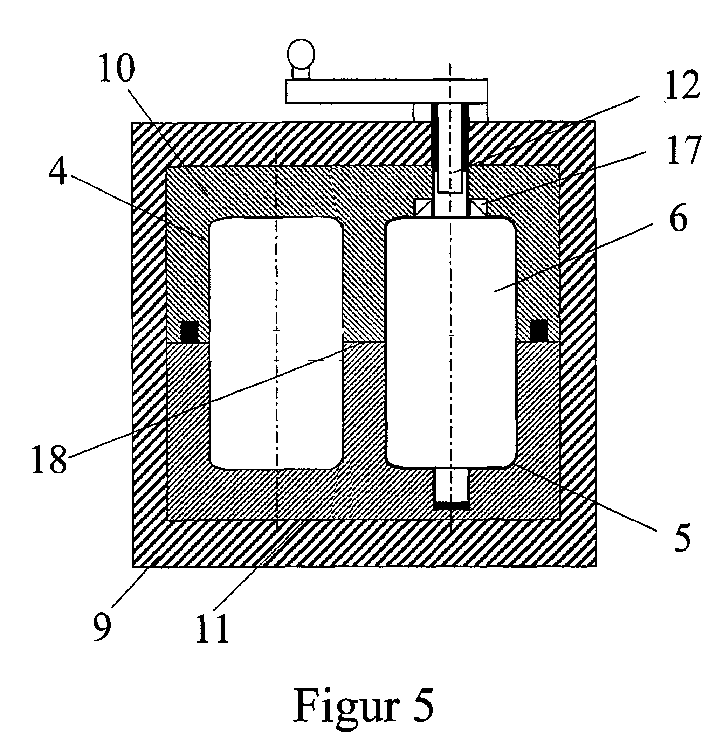

Figur 5 zeigt ein weiteres Ausführungsbeispiel des Einsatzstückes 7, das nun vor dem Einsetzen in den Anschlußflansch 9 zusammengelipst wird. Dadurch, daß die Teilungsebene 18 der Einsatzhälften 10, 11 senkrecht zur Luftdurchströmrichtung gelegen ist, liegt der Wellendichtring 17 nicht mehr in der Teilungsebene 18 und ist damit einem wesentlich geringeren Verschleiß ausgesetzt. Im übrigen ist es auch denkbar das Einsatzstück 7 mit der Drallklappe 6 in einem Spritzvorgang, dem sogenannten 2-Komponentenverfahren herzustellen. Darüber hinaus sollte es deutlich sein, daß, wenn gewünscht, das Einsatzstück auch lediglich einen Kanal mit Drallklappe aufweisen kann.

## Patentansprüche

1. Luftansaugkanalsystem für Brennkraftmaschinen mit einem Aufteilungsabschnitt eines zu jedem einzelnen Zylinder der Brennkraftmaschine führenden Einzelansaugkanals in zwei Einzelkanäle, von denen einer durch eine Drallklappe abgeschlossen werden kann, wobei der Aufteilungsabschnitt als Einsatzstück ausgebildet ist, das in einen Einsatzschacht am Luftansaugkanalsystem eingesetzt ist und einen Anschlußflansch zum Zylinderkopf der Brennkraftmaschine hin bildet, **dadurch gekennzeichnet, daß** das Einsatzstück (7) aus zwei zusammengesetzten Einsatzhälften (10, 11) gebildet ist.

2. Luftansaugkanalsystem nach Anspruch 1, **dadurch gekennzeichnet, daß** das Einsatzstück (7) einen Wellenstumpf (12) aufweist, der mit der Drallklappe (6) verbunden ist und durch einen Schlitz in der Wandung des Einsatzschachtes (8) nach außen ragt.

3. Luftansaugkanalsystem nach Anspruch 1, **dadurch gekennzeichnet, daß** das Einsatzstück (7) einen Wellenstumpf (12) aufweist, der mit der als Kupplung ausgeführten Drallklappe (6) verbunden ist und durch eine Öffnung in der Wandung des Einsatzschachtes (8) nach außen ragt.

4. Luftansaugkanalsystem nach Anspruch 2 oder 3, **dadurch gekennzeichnet, daß** der Wellenstumpf (12) jedes Einsatzstückes (7) über eine Antriebsverbindung (13) mit einem Steller (14) verbunden ist.

5. Luftansaugkanalsystem nach Anspruch 4, **dadurch gekennzeichnet, daß** Elemente der Antriebsverbindung (13) und des Stellers (14) in einem auf die Wellenstümpfe (12) aufgesetzten Kassettenteil angeordnet sind.

6. Luftansaugkanalsystem nach Anspruch 4, **dadurch gekennzeichnet, daß** jeweils paarweise angeordnete Wellenstümpfe (12) über eine Antriebsverbindung (13) und je ein Wellenstumpf (12) der paarweise angeordneten über eine Antriebsverbindung (13) mit dem Steller (14) verbunden sind.

## Claims

1. Air intake duct system for internal combustion engines with a portion dividing an individual intake duct, which leads to each individual cylinder of the internal combustion engine, into two individual ducts, one of which can be closed by a swirl flap, wherein the dividing portion is formed as an insert, which is inserted in an insert well in the air intake duct system and forms a connecting flange towards the cylinder head of the internal combustion engine, **characterised in that** the insert (7) is formed from two assembled insert halves (10, 11).

2. Air intake duct system according to Claim 1, **characterised in that** the insert (7) comprises a shaft stub (12), which is connected to the swirl flap (6) and projects outwards through a slit in the wall of the insert well (8).

3. Air intake duct system according to Claim 1, **characterised in that** the insert (7) comprises a shaft stub (12), which is connected to the swirl flap (6), the latter being constructed as a coupling, and projects outwards through an opening in the wall of the insert well (8).

4. Air intake duct system according to Claim 2 or 3, **characterised in that** the shaft stub (12) of each insert (7) is connected via a drive connection (13) to an actuator (14).

5. Air intake duct system according to Claim 4, **characterised in that** elements of the drive connection (13) and of the actuator (14) are disposed in a cassette part mounted on the shaft stubs (12).

6. Air intake duct system according to Claim 4, **characterised in that** shaft stubs (12) disposed in pairs are connected via a drive connection (13) and each shaft stub (12) of those disposed in pairs via a drive connection (13) to the actuator (14).

## Revendications

1. Système de conduits d'admission pour moteurs à combustion interne comportant une section de répartition d'un conduit d'admission individuel menant à chaque cylindre individuel du moteur à combustion interne en deux conduits individuels, dont l'un peut être fermé par un volet pivotant, la section de répartition étant réalisée sous forme de pièce rapportée mise en place dans une gaine rapportée sur le système de conduits d'admission et formant une bride de raccordement en direction de la culasse de cylindre du moteur à combustion interne, **caractérisé en ce que** la pièce rapportée (7) est formée de deux moitiés (10, 11) de pièce rapportée assemblées.

2. Système de conduits d'admission suivant la revendication 1, **caractérisé en ce que** la pièce rapportée (7) présente un bout d'arbre (12), qui est relié au volet pivotant (6) et fait saillie vers l'extérieur au travers d'une fente dans la paroi de la gaine rapportée (8).

3. Système de conduits d'admission suivant la revendication 1, **caractérisé en ce que** la pièce rapportée (7) présente un bout d'arbre (12), qui est relié au volet pivotant (6) réalisé sous forme d'accouplement et fait saillie vers l'extérieur au travers d'un orifice dans la paroi de la gaine rapportée (8).

4. Système de conduits d'admission suivant l'une des revendications 2 et 3, **caractérisé en ce que** le bout d'arbre (12) de chaque pièce rapportée (7) est relié à un actionneur (14) par l'intermédiaire d'une liaison d'entraînement (13).

5. Système de conduits d'admission suivant la revendication 4, **caractérisé en ce que** des éléments de la liaison d'entraînement (13) et de l'actionneur (14) sont disposés dans un élément de châssis placé sur les bouts d'arbre (12).

6. Système de conduits d'admission suivant la revendication 4, **caractérisé en ce que** des bouts d'arbre (12) disposés par paires sont reliés à chaque fois par l'intermédiaire d'une liaison d'entraînement (13), et un bout d'arbre (12) de chaque paire est relié à l'actionneur (14) par l'intermédiaire d'une liaison d'entraînement (13).
